# EUROPEAN PATENT APPLICATION

(11) **EP 4 418 365 A1**
(43) Date of publication of application: **21.08.2024**
(21) Application number: 22881057.8
(22) Date of filing: 12.10.2022
(51) Int. Cl.: H01M 4/587, H01M 4/36

(54) **NEGATIVE ELECTRODE MATERIAL, BATTERY, METHOD FOR MANUFACTURING NEGATIVE ELECTRODE MATERIAL, AND METHOD FOR MANUFACTURING BATTERY**

(30) Priority: 13.10.2021 JP 2021168445
(71) Applicant: Mitsubishi Materials Corporation, Tokyo 100-8117 (JP)
(72) Inventor: RIKITA, Naoki, Tokyo 100-8117 (JP); NAKADA, Yoshinobu, Saitama-shi, Saitama 330-8508 (JP); TANG, Jie, Tsukuba-shi, Ibaraki 305-0047 (JP); ZHANG, Kun, Tsukuba-shi, Ibaraki 305-0047 (JP)
(74) Representative: Gille Hrabal Partnerschaftsgesellschaft mbB Patentanwälte
(86) International application number: PCT/JP2022/038091
(87) International publication number: WO 2023/063362

(57) **Abstract**

A tungsten compound is appropriately disposed on a surface of carbon. The negative electrode material is a negative electrode material for a battery that includes amorphous carbon and sodium tungstate provided on a surface of the amorphous carbon.

## Description

### Field

The present invention relates to a negative electrode material, a battery, a method for manufacturing a negative electrode material, and a method for manufacturing a battery.

### Background

As a negative electrode material for a lithium ion secondary battery, carbon may be mainly used. For example, Patent Literature 1 describes a negative electrode in which tungsten trioxide is disposed on a surface of graphite. By disposing tungsten trioxide on the surface of the graphite, diffusivity of lithium ions can be improved, and the characteristics of the battery such as capacity can be improved.

### Citation List

### Patent Literature

Patent Literature 1: JP 2018-45904 A

### Summary

### Technical Problem

However, in such a negative electrode material, there is room for improvement in order to appropriately dispose a tungsten compound on a surface of carbon.

The present invention has been made in view of the above, and an object of the present invention is to provide a negative electrode material that can appropriately dispose a tungsten compound on a surface of carbon, a battery, a method for manufacturing a negative electrode material, and a method for manufacturing a battery.

### Solution to Problem

To solve the above problem and achieve the object, a negative electrode material according to the present disclosure is a negative electrode material for a battery and includes: amorphous carbon; and sodium tungstate provided on a surface of the amorphous carbon.

To solve the above problem and achieve the object, a battery according to the present disclosure includes: the above-described negative electrode material; and a positive electrode material.

To solve the above problem and achieve the object, a method for manufacturing a negative electrode material according to the present disclosure includes the steps of: adding amorphous carbon to a first solution containing sodium in which a surfactant is dissolved, to produce a second solution in which amorphous carbon is dispersed in the first solution; mixing the second solution and a tungsten solution containing tungsten to produce a third solution; and producing a negative electrode material by removing a liquid component of the third solution.

To solve the above problem and achieve the object, a method for manufacturing a battery according to the present disclosure includes: the above-described method for manufacturing a negative electrode material; and a step of manufacturing a positive electrode material. Advantageous Effects of Invention

According to the present invention, a tungsten compound can be appropriately disposed on a surface of carbon.

### Brief Description of Drawings

FIG. 1 is a schematic partial cross-sectional view of a battery according to the present embodiment.
FIG. 2 is a schematic cross-sectional view of a negative electrode according to the present embodiment.
FIG. 3 is a flowchart for explaining a method for manufacturing a battery of the present embodiment.
FIG. 4 is a table showing identification results of the negative electrode material in each example. Description of Embodiments

Hereinafter, the present invention will be described in detail with reference to the drawings. Note that the present invention is not limited by the mode for carrying out the following invention (hereinafter, referred to as an embodiment). In addition, constituent elements in the following embodiments include those that can be easily assumed by those skilled in the art or those that are substantially the same. Furthermore, the constituent elements disclosed in the following embodiments can be appropriately combined.

### Battery

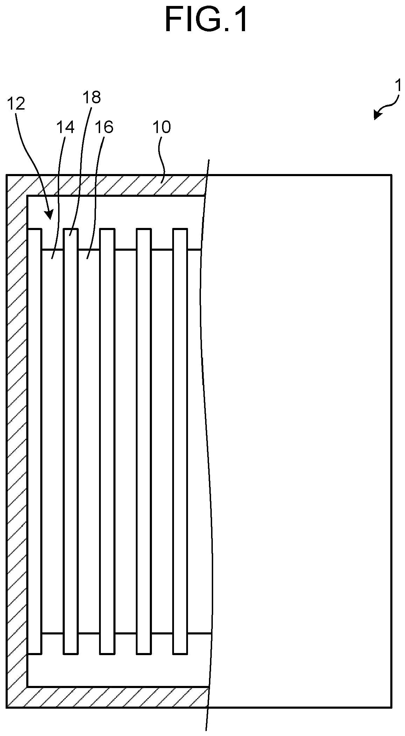

FIG. 1 is a schematic partial cross-sectional view of a battery according to the present embodiment. A battery 1 according to the present embodiment is a lithium ion secondary battery. The battery 1 includes a casing 10, an electrode group 12, and an electrolyte (not illustrated). The casing 10 is a case for storing the electrode group 12 and the electrolyte therein. In addition to the electrode group 12, the casing 10 may include wiring, terminals, and the like connected to the electrode group 12.

The electrode group 12 includes a negative electrode 14, a positive electrode 16, and a separator 18. The electrode group 12 has a configuration in which the separator 18 is disposed between the negative electrode 14 and the positive electrode 16. In the example of FIG. 1, the electrode group 12 has a so-called stacked electrode group structure in which a rectangular negative electrode 14 and a rectangular positive electrode 16 are alternately stacked with a rectangular separator 18 interposed therebetween. However, the electrode group 12 is not limited to the stacked electrode group structure. For example, the electrode group 12 may have a wound electrode group structure in which a strip-shaped negative electrode 14 and a strip-shaped positive electrode 16 are stacked with a strip-shaped separator 18 interposed therebetween and wound.

### Negative Electrode

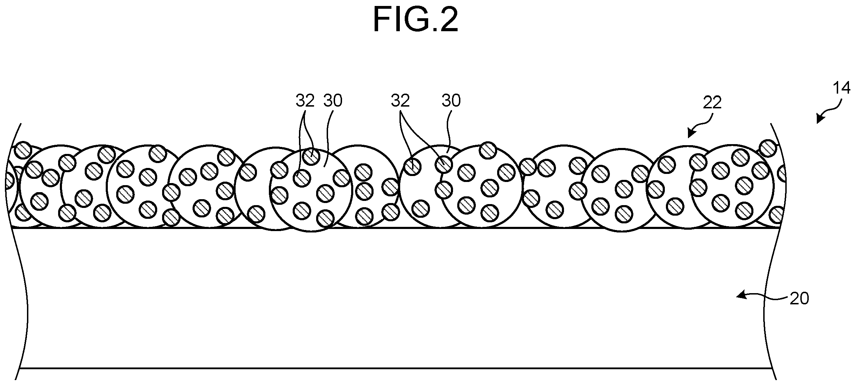

FIG. 2 is a schematic cross-sectional view of a negative electrode according to the present embodiment. As illustrated in FIG. 2, the negative electrode 14 includes a current collecting layer 20 and a negative electrode material layer 22. The current collecting layer 20 is a layer formed of a conductive member. Examples of the conductive member of the current collecting layer 20 include copper. The negative electrode material layer 22 is a layer containing the negative electrode material according to the present embodiment. The negative electrode material layer 22 is provided on a surface of the current collecting layer 20. A thickness of the current collecting layer 20 may be, for example, about 15 µm or more and 40 µm or less, and a thickness of the negative electrode material layer 22 may be, for example, about 20 µm or more and 200 µm or less.

The negative electrode material layer 22 contains a negative electrode material. The negative electrode material includes amorphous carbon and sodium tungstate provided on a surface of the amorphous carbon. The sodium tungstate is a tungsten compound represented by NaₓWO_{y}, and x and y are numbers larger than 0, respectively. Details of NaₓWO_{y} will be described below.

Note that sodium tungstate may take not only a form of NaₓWO_{y} but also a form such as Na₂WO₄ or Na₅W₁₄O₄₄ in terms of a crystal structure. Note that Na₂WO₄ is represented by the chemical formula of NaₓWO_{y} since the molar ratio of Na is 2, the molar ratio of W is 1, and the molar ratio of O is 4. In addition, since Na₅W₁₄O₄₄ is represented by the chemical formula of Na_{5/14}WO_{44/14} (that is, the molar ratio of Na is 5/14, the molar ratio of W is 1, and the molar ratio of O is 44/14) when the molar ratio of W is converted to 1, it can be said that it is represented by the chemical formula of NaₓWO_{y}. That is, it can be said that sodium tungstate represented by the chemical formula of NaₓWO_{y} refers to sodium tungstate in which a ratio of the molar ratio of Na, the molar ratio of W, and the molar ratio of O is X:1:Y.

More specifically, the negative electrode material of the negative electrode material layer 22 includes amorphous carbon particles 30 which are particles of amorphous carbon, and NaₓWO_{y} (sodium tungstate) particles 32 which are particles of sodium tungstate. Note that the shape of the particle here is not limited to a spherical shape or the like, and may be any shape such as a linear shape or a sheet shape. In addition, the negative electrode material of the present embodiment may include inevitable impurities in the balance.

The negative electrode material of the negative electrode material layer 22 includes a plurality of amorphous carbon particles 30. The amorphous carbon is amorphous carbon having no crystal structure, and is carbon having no planar crystal structure such as a graphite structure or a crystal structure such as diamond. Amorphous carbon is sometimes called amorphous carbon or diamond-like carbon, and can be said to be carbon in which sp2 bonds and sp3 bonds are mixed.

The amorphous carbon particles 30 are composed of amorphous carbon as a whole, and preferably contain no components other than amorphous carbon except for inevitable impurities. Specifically, it is preferable that the amorphous carbon particles 30 do not contain graphite.

In addition, since the amorphous carbon can contain a functional group (for example, a hydroxy group and a carboxyl group) on the surface, sodium tungstate can be disposed on the surface of the amorphous carbon. Therefore, sodium tungstate can be appropriately trapped on the surface of the amorphous carbon by the functional group, and sodium tungstate can be appropriately attached and disposed on the surface. In addition, since sodium tungstate is fixed to the surface of the amorphous carbon by the functional group, adhesion of the sodium tungstate to the surface of the amorphous carbon can be increased, and separation of the sodium tungstate from the surface of the carbon can be suppressed. In particular, since a hard carbon raw material is manufactured at a temperature lower than that of, for example, graphite, it is easy to remain without removing the functional group, and sodium tungstate can be appropriately sticked and disposed on the surface.

An average particle size of the amorphous carbon particles 30 is preferably 1 µm or more and 50 µm or less, and more preferably 1 µm or more and 20 µm or less. When the average particle size is within this range, the strength of the electrode film can be maintained.

The negative electrode material of the negative electrode material layer 22 includes a plurality of NaₓWO_{y} particles 32. The NaₓWO_{y} particles 32 are provided on the surface of the amorphous carbon particle 30. More specifically, a plurality of NaₓWO_{y} particles 32 are provided for each amorphous carbon particle 30. The NaₓWO_{y} particles 32 are in close contact (contact) with the surface of the amorphous carbon particle 30, and more specifically, the NaₓWO_{y} particles 32 and the amorphous carbon particles 30 are made into a composite. The making into a composite here refers to a state in which the NaₓWO_{y} particles 32 cannot be separated from the amorphous carbon particles 30 at least when no external force acts.

The NaₓWO_{y} particles 32 included in the negative electrode material of the negative electrode material layer 22 preferably have y (molar ratio of O) of 3, in other words, preferably NaₓWO₃. In addition, in the NaₓWO_{y} particles 32 included in the negative electrode material of the negative electrode material layer 22, x (molar ratio of Na) is preferably more than 0 and 1 or less, and y (molar ratio of O) is preferably 2 or more and 4 or less. In addition, in the NaₓWO_{y} particles 32, it is more preferable that the molar ratio of x is 0.1 or more and 0.7 or less and y is 2.5 or more and 3.5 or less, it is still more preferable that the molar ratio of x is 0.1 or more and 0.7 or less and y is 2.8 or more and 3.2 or less, and it is further still more preferable that the molar ratio of x is 0.3 or more and 0.5 or less and y is 2.8 or more and 3.2 or less. When x and y are in these ranges, the NaₓWO_{y} particles 32 can be appropriately disposed on the surface of the amorphous carbon particle 30. Note that the negative electrode material of the negative electrode material layer 22 may include only one type of NaₓWO_{y} particles 32 or may include a plurality of types of NaₓWO_{y} particles 32.

The negative electrode material of the negative electrode material layer 22 preferably includes at least one of Na_{0.3}WO₃ and Na_{0.1}WO₃ as the NaₓWO_{y} particle 32. That is, only Na_{0.3}WO₃ may be included as the NaₓWO_{y} particles 32, only Na_{0.1}WO₃ may be included as the NaₓWO_{y} particles 32, or both Na_{0.3}WO₃ and Na_{0.1}WO₃ may be included as the NaₓWO_{y} particles 32. Further, Na₂WO₄ or Na₅W₁₄O₄₄ may be used. As described above, the negative electrode material of the negative electrode material layer 22 in the present embodiment preferably includes at least one of Na_{0.3}WO₃, Na_{0.1}WO₃, Na₂WO₄, and Na₅W₁₄O₄₄ as the sodium tungstate.

The compound included in the negative electrode material such as the NaₓWO_{y} particles 32 can be measured by X-ray diffraction (XRD). The measurement conditions in XRD may be, for example, as follows.
- Measuring apparatus: Ultima IV manufactured by Rigaku Corporation
- Used tube: Cu
- Tube voltage: 40 kV
- Tube current: 40 mA
- Scanning range: 5° to 80°
- Scanning speed: 2°/min

As a database for identifying the compound, ICDD (PDF2.DAT), that is, PDF2.DAT of International Center for Diffraction Data (ICDD) in the powder diffraction/crystal structure database may be used. Then, for a crystal peak detected by XRD, the compound included in the measurement sample (here, the negative electrode material) may be specified using PDXL2 which is integrated powder X-ray diffraction software. Specifically, a compound having a figure of merit (FOM) of a threshold or less may be extracted using the same software, and the compound having the FOM of the threshold or less may be specified as a compound included in the measurement sample (here, the negative electrode material). The FOM takes a value of 0 to 100, and the smaller the value, the higher the matching degree. The threshold of the FOM may be 10. That is, for example, when the FOM of the diffraction peak of the negative electrode material with respect to the diffraction peak of Na_{0.3}WO₃ in ICDD is a threshold (for example, 10) or less, it is determined that Na_{0.3}WO₃ is included in the negative electrode material. For example, when a peak waveform in an X-ray diffraction analysis result of an analyte shows the peak waveform of carbon, the position of the peak waveform identifies it as, for example, a (002) graphite structure. However, if the peak waveform does not appear and is broad, it can be determined that the material is amorphous carbon.

The NaₓWO_{y} particles 32 preferably include at least one of particles having a cubic crystal structure and particles having a tetragonal crystal structure. That is, the negative electrode material may include only cubic crystals as the NaₓWO_{y} particles 32, may include only tetragonal crystals as the NaₓWO_{y} particles 32, or may include both cubic crystals and tetragonal crystals as the NaₓWO_{y} particles 32. In a case where both the cubic crystal and the tetragonal crystal are included as the NaₓWO_{y} particles 32, the negative electrode material of the negative electrode material layer 22 may include more tetragonal NaₓWO_{y} particles 32 than the cubic NaₓWO_{y} particles 32. Examples of the cubic NaₓWO_{y} include Na_{0.3}WO₃, and examples of the tetragonal NaₓWO_{y} include Na_{0.1}WO₃. However, the crystal structure of NaₓWO_{y} included in the negative electrode material is not limited thereto, and for example, NaₓWO_{y} having another crystal structure may be included. For example, Na₂WO₄ (cubic crystal) and Na₅W₁₄O₄₄ (triclinic crystal) may be included. In addition, the negative electrode material may include amorphous NaₓWO_{y}.

Note that the crystal structure of the NaₓWO_{y} particles 32 can also be identified by the same method as the identification of the compound included in the negative electrode material. That is, for example, in a case where the FOM of the diffraction peak of the negative electrode material and an FOM of a diffraction peak of cubic Na_{0.3}WO₃ in ICDD are thresholds (for example, 10) or less, it is determined that cubic Na_{0.3}WO₃ is included in the negative electrode material.

An average particle size of the NaₓWO_{y} particles 32 is preferably smaller than the average particle size of the amorphous carbon particles 30. The average particle size of the NaₓWO_{y} particles 32 is preferably 100 nm or more and 20 µm or less, and more preferably 100 nm or more and 1 µm or less.

As described above, the negative electrode material has a structure in which the particulate sodium tungstate (NaₓWO_{y} particles 32) is provided on the surface of the amorphous carbon particle 30, but is not limited thereto. The negative electrode material may have a structure in which sodium tungstate is provided on a surface of amorphous carbon, and the shape of the sodium tungstate provided on the surface of the amorphous carbon may be arbitrary.

A content of the sodium tungstate (NaₓWO_{y} particles 32) in the negative electrode material can be confirmed by measuring contents of Na, W, and O by fluorescent X-ray analysis. That is, since at least a part of the total amount of Na, W, and O detected by fluorescent X-ray analysis constitutes the sodium tungstate (NaₓWO_{y} particles 32), the content of the sodium tungstate can be confirmed by the contents of Na, W, and O.

The negative electrode material preferably has a content of Na of 0.01% or more and 0.5% or less in terms of a mass ratio, a content of W of 0.5% or more and 10% or less in terms of a mass ratio, and a content of O of 0.1% or more and 5% or less in terms of a mass ratio when measured by fluorescent X-ray analysis. In addition, the negative electrode material more preferably has the content of Na of 0.02% or more and 0.1% or less in terms of a mass ratio, the content of W of 1% or more and 8% or less in terms of a mass ratio, and the content of O of 0.3% or more and 3% or less in terms of a mass ratio when measured by fluorescent X-ray analysis. In addition, the negative electrode material still more preferably has the content of Na of 0.025% or more and 0.07% or less in terms of a mass ratio, the content of W of 1% or more and 7% or less in terms of a mass ratio, and the content of O of 0.5% or more and 1.5% or less in terms of a mass ratio when measured by fluorescent X-ray analysis. When the contents of Na, W, and O are in these ranges, an appropriate amount of sodium tungstate is contained, and a tungsten compound can be appropriately disposed on the surface of the carbon.

When the negative electrode material is measured by fluorescent X-ray analysis, the content of C is preferably 85% or more and 99% or less, more preferably 90% or more and 98% or less, and still more preferably 92% or more and 98% or less in terms of a mass ratio. When the content of C is in this range, the tungsten compound can be appropriately disposed on the surface of the carbon.

When the negative electrode material is measured by fluorescent X-ray analysis, Na/W which is a ratio of the content of Na to the content of W is preferably 0.001 or more and 0.15 or less, more preferably 0.002 or more and 0.1 or less, and still more preferably 0.003 or more and 0.06 or less in terms of a mass ratio. In addition, when the negative electrode material is measured by fluorescent X-ray analysis, W/C which is a ratio of the content of W to the content of C is preferably 0.005 or more and 0.2 or less, more preferably 0.01 or more and 0.1 or less, and still more preferably 0.01 or more and 0.07 or less in terms of a mass ratio. When the ratios of the contents are in these ranges, the tungsten compound can be appropriately disposed on the surface of the carbon.

The fluorescent X-ray analysis may be performed using a wavelength dispersive fluorescent X-ray analyzer, and the measurement conditions may be as follows.
- Measuring apparatus: ZSX PrimusIV manufactured by Rigaku Corporation
- Tube voltage: 30 kV
- Tube current: 100 mA

As a measurement method, a standardless fundamental parameter method may be used, and for analysis, the SQX scattered radiation FP method from Rigaku Corporation may be used.

Note that the negative electrode material layer 22 may contain a substance other than the negative electrode material (amorphous carbon particles 30 and NaₓWO_{y} particles 32). The negative electrode material layer 22 may contain, for example, a binder. A material of the binder may be any material, and examples thereof include polyvinylidene fluoride (PVDF), carboxymethyl cellulose (CMC), styrene butadiene rubber (SBR), and polyacrylic acid (PAA). The binders may be used alone or in combination of two or more. However, it is preferable that the negative electrode material layer 22, in other words, the negative electrode material does not contain graphite.

In addition, the disposition of the NaₓWO_{y} particles 32 on the surface of the amorphous carbon particle 30 can be confirmed by observation with an electron microscope such as a scanning electron microscope (SEM) or a transmission electron microscope (TEM).

In addition, the average particle size in the present embodiment refers to an average of primary particle sizes (diameter of one particle). The average particle size can be measured by any method, for example, the average particle size may be measured using an SEM photograph.

### Positive Electrode

The positive electrode 16 includes a current collecting layer and a positive electrode material layer. The current collecting layer of the positive electrode 16 is a layer formed of a conductive member, and examples of the conductive member here include aluminum. The positive electrode material layer is a layer of a positive electrode material, and is provided on a surface of the current collecting layer of the positive electrode 16. A thickness of the current collecting layer of the positive electrode may be, for example, about 10 µm or more and 30 µm or less, and a thickness of the positive electrode material layer may be, for example, about 10 µm or more and 100 µm or less.

The positive electrode material layer contains a positive electrode material. The positive electrode material includes particles of a lithium compound which is a compound containing lithium. The lithium compound may be a lithium-containing metal oxide, a lithium-containing phosphate, or the like. More specifically, examples of the lithium compound include LiCoO₂, LiNiO₂, LiMnO₂, LiMn₂O₄, LiNiₐCo_{b}Mn_{c}O₂ (where 0 < a < 1, 0 < b < 1, 0 < c < 1, and a + b + c = 1), and LiFePO₄. The lithium compound may contain only one kind of material or two or more kinds of materials. In addition, the positive electrode material layer may contain a substance other than the positive electrode material, and may contain, for example, a binder. The material of the binder may be any material, and examples thereof include polyvinylidene fluoride (PVDF), polytetrafluoroethylene (PTFE), and PAA. The binders may be used alone or in combination of two or more.

### Separator

The separator 18 is an insulating member. In the present embodiment, the separator 18 is, for example, a porous film formed of a resin, and examples of the resin include polyethylene (PE) and polypropylene (PP). In addition, the separator 18 may have a structure in which films of different materials are stacked. In addition, the separator 18 may include a heat resistant layer. The heat resistant layer is a layer containing a substance having a high melting point. The heat resistant layer may include, for example, particles of an inorganic material such as alumina.

### Electrolyte

The electrolyte provided in the battery 1 is a nonaqueous electrolyte. Voids in the electrode group 12 are impregnated with the electrolyte. The electrolyte contains, for example, a lithium salt and an aprotic solvent. The lithium salt is dispersed and dissolved in an aprotic solvent. Examples of the lithium salt include LiPF₆, LiBF₄, Li[N(FSO₂)₂], Li[N(CF₃SO₂)₂], Li[B(C₂O₄)₂], and LiPO₂F₂. The aprotic solvent may be, for example, a mixture of a cyclic carbonate ester and a chain carbonate ester. Examples of the cyclic carbonate ester include EC, PC, and butylene carbonate. Examples of the cyclic carbonate ester include dimethyl carbonate (DMC), ethyl methyl carbonate (EMC), and diethyl carbonate (DEC).

### Method for Manufacturing Battery

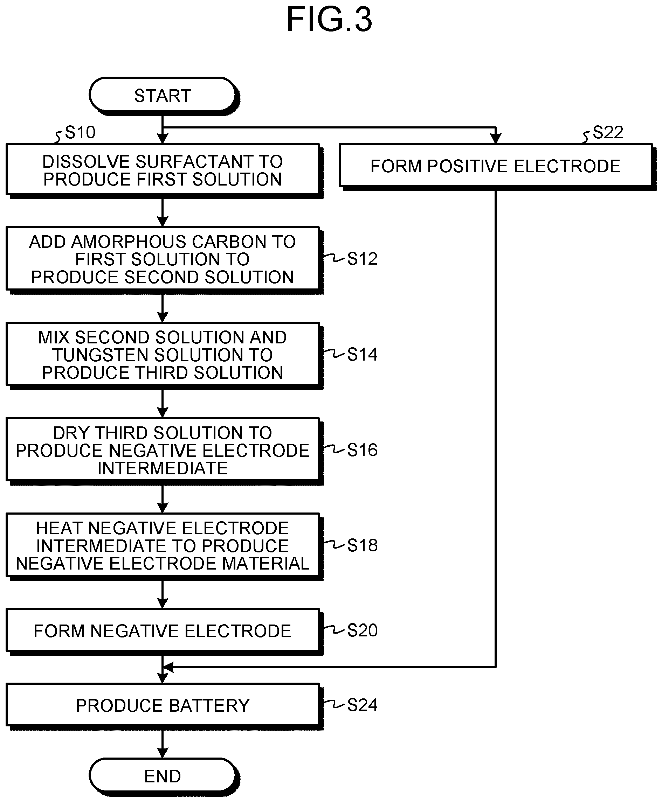

Next, a method for manufacturing the battery 1 according to the present embodiment will be described. FIG. 3 is a flowchart for explaining a method for manufacturing a battery of the present embodiment. As illustrated in FIG. 3, in the present manufacturing method, the negative electrode 14 is formed in Step S10 to Step S20.

Specifically, a surfactant is dissolved in a solvent to produce a first solution (Step S10). The first solution is a solution in which a surfactant is dissolved and Na (Na in an ionic state) is contained. The surfactant is used to disperse amorphous carbon. As the surfactant, any substance capable of dispersing amorphous carbon may be used, and in the present embodiment, a substance containing Na is used. As the surfactant containing Na, for example, sodium dodecyl sulfate (SDS) may be used. The solvent of the first solution may be any solvent that dissolves the surfactant, and for example, water may be used.

Note that the surfactant is not limited to a surfactant containing Na. In this case, for example, a surfactant not containing Na and a compound containing Na may be dissolved in a solvent to produce the first solution. As the surfactant not containing Na, for example, poly(oxyethylene) alkyl ether, polyoxyethylene nonylphenyl ether, or the like may be used. As the poly(oxyethylene) alkyl ether, poly(oxyethylene) alkyl ether having an alkyl group having 12 or more and 15 or fewer carbon atoms is preferably used, and for example, C₁₂H₂₅O(C₂H₄)ₙH (poly (oxyethylene) dodecyl ether), C₁₃H₂₇O(C₂H₄)ₙH (poly (oxyethylene) tridecyl ether), C₁₃H₂₇O(C₂H₄)ₙH (poly (oxyethylene) isotridecyl ether), C₁₄H₂₅O(C₂H₄)ₙH (poly (oxyethylene) tetradecyl ether), C₁₅₅H₂₅O(C₂H₄)ₙH (poly (oxyethylene) pentadecyl ether), or the like may be used. Here, n is an integer of 1 or more. As the polyoxyethylene nonylphenyl ether, for example, C₉H₁₉C₆(CH₂CH₂O)₈H, C₉H₁₉C₆(CH₂CH₂O)₁₀H, C₉H₁₉C₆(CH₂CH₂O)₁₂H, or the like may be used. As the compound containing Na, for example, sodium sulfate, sodium stearate, sodium hyaluronate, sodium hypochlorite, or the like may be used.

A content of the surfactant in the first solution, that is, the amount of the surfactant added is preferably 0.1% or more and 10% or less, more preferably 0.5% or more and 7% or less, and still more preferably 1% or more and 5% or less in terms of a mass ratio with respect to the amount of the amorphous carbon raw material added in the subsequent Step S12. In this numerical range, the affinity between amorphous carbon and NaₓWO_{y} can be appropriately improved.

Next, an amorphous carbon raw material is added to the first solution to produce a second solution (Step S12). The amorphous carbon raw material is amorphous carbon used as a raw material. An average particle size of the amorphous carbon raw material is, for example, preferably 1 µm or more and 50 µm or less, and more preferably 1 µm or more and 20 µm or less. When the average particle size of the amorphous carbon raw material is in this range, the capacity of the battery can be increased. In Step S12, the first solution to which the amorphous carbon raw material is added, that is, the second solution is stirred to disperse the amorphous carbon raw material in the first solution. That is, the second solution can be said to be the first solution in which the amorphous carbon raw material is dispersed.

The amorphous carbon raw material may be manufactured, for example, by an oil furnace method. In the oil furnace method, for example, a raw material oil is sprayed into a high-temperature atmosphere to be thermally decomposed, and then rapidly cooled to manufacture a particulate amorphous carbon raw material. However, the method for manufacturing the amorphous carbon raw material is not limited thereto, and may be any method.

Next, the second solution and a tungsten solution are mixed to produce a third solution (Step S14). The tungsten solution is a solution containing W and O. The tungsten solution is, for example, a solution produced by dissolving a tungsten oxide raw material in a solvent. The tungsten oxide raw material here is a raw material of the NaₓWO_{y} particles 32, and for example, tungsten trioxide is used. As the solvent, for example, an alkaline liquid is used, and in the present embodiment, an aqueous ammonia solution is used. Therefore, in the present embodiment, the tungsten solution is an alkaline solution containing W and O, more specifically, ammonium tungstate. However, the tungsten solution may be any solution containing W and O.

A content of W contained in the tungsten solution added to the second solution, that is, the amount of W added is preferably 0.1% or more and 10% or less, more preferably 0.5% or more and 7% or less, and still more preferably 1% or more and 5% or less in terms of a mass ratio with respect to the amount of the amorphous carbon raw material added in Step S12. In this numerical range, the affinity between amorphous carbon and NaₓWO_{y} can be appropriately improved.

Next, a liquid component of the third solution is removed to produce a negative electrode material (negative electrode material production step). In the present embodiment, Steps S16 and S18 are executed as the negative electrode material production steps. Specifically, the third solution is dried to produce a negative electrode intermediate (Step S16; drying step). In Step S16, for example, the liquid component contained in the added solution is removed, that is, evaporated by drying the third solution at 80°C for 12 hours in the atmosphere. However, the drying conditions may be arbitrary. It can be said that the negative electrode intermediate contains a solid component remaining after the liquid component of the third solution is removed.

Next, the negative electrode intermediate is heated to produce a negative electrode material (Step S18; heating step). By heating the negative electrode intermediate, a negative electrode material in which the NaₓWO_{y} particles 32 are provided on the surface of the amorphous carbon particle 30 is formed. That is, Na, W, and O in an ionic state contained in the third solution are precipitated as the NaₓWO_{y} particles 32 on the surface of the amorphous carbon particle 30 dispersed in the third solution, and a negative electrode material is formed.

The conditions for heating the negative electrode intermediate in the heating step may be arbitrary, and the heating step is preferably performed as follows. That is, the heating step preferably includes a step of putting the negative electrode intermediate into a furnace to make the inside of the furnace an inert atmosphere, a first heating step of heating the negative electrode intermediate to a first temperature at a first heating rate, and a second heating step of heating the negative electrode intermediate heated to the first temperature to a second temperature at a second heating rate.

The inert atmosphere in the step of making the inside of the furnace an inert atmosphere may be, for example, a nitrogen atmosphere or a rare gas atmosphere such as Ar. For example, the inert atmosphere may be created by replacing oxygen in the furnace with nitrogen or a rare gas. Note that this step is not essential.

The first heating step is a step of removing metals, organic substances, and the like contained in the negative electrode intermediate. The first heating temperature in the first heating step is, for example, 550°C, but is not limited thereto, and is preferably 150°C or higher and 625°C or lower, preferably 175°C or higher and 600°C or lower, and more preferably 200°C or higher and 575°C or lower. The first heating rate may be any rate. For example, the first heating rate is preferably 45°C/hour or more and 75°C/hour or less, more preferably 50°C/hour or more and 70°C/hour or less, and still more preferably 55°C/hour or more and 65°C/hour or less. When the first heating temperature and the first heating rate are in these ranges, metals, organic substances, and the like contained in the negative electrode intermediate can be appropriately removed.

The second heating step is a step of producing NaₓWO_{y} after the first heating step. The second heating temperature in the second heating step is higher than the first heating temperature, for example, 700°C, but is not limited thereto, and is preferably 680°C or higher and 750°C or lower, preferably 685°C or higher and 740°C or lower, and more preferably 690°C or higher and 730°C or lower. The second heating rate may be any rate. The second heating rate is preferably higher than the first heating rate, and for example, is preferably 165°C/hour or more and 195°C/hour or less, more preferably 170°C/hour or more and 190°C/hour or less, and still more preferably 175°C/hour or more and 185°C/hour or less. When the second heating temperature and the second heating rate are in these ranges, NaₓWO_{y} can be appropriately produced while shortening the time required for the process.

In the second heating step, the negative electrode intermediate heated to the second heating temperature is preferably held at the second heating temperature for a predetermined time. The holding time here is preferably 1.25 hours or longer and 2.75 hours or shorter, more preferably 1.5 hours or longer and 2.5 hours or shorter, and still more preferably 1.75 hours or longer and 2.25 hours or shorter.

Note that the step of heating the negative electrode intermediate to the third temperature at the third heating rate and holding the negative electrode intermediate at the third temperature for a predetermined time may be provided before the first heating step (and after the step of creating the inert atmosphere in the present embodiment). The third temperature is lower than the first temperature, and is, for example, 100°C, but is not limited thereto, and is preferably 80°C or higher and 120°C or lower, preferably 85°C or higher and 115°C or lower, and more preferably 90°C or higher and 110°C or lower. The third heating rate may be any rate. For example, the third heating rate is preferably 165°C/hour or more and 195°C/hour or less, more preferably 170°C/hour or more and 190°C/hour or less, and still more preferably 175°C/hour or more and 185°C/hour or less. In addition, the predetermined time for holding at the third heating temperature may also be arbitrary, and for example, is preferably 0.5 hours or longer and 1.75 hours or shorter, more preferably 0.75 hours or longer and 1.5 hours or shorter, and still more preferably 1 hour or longer and 1.25 hours or shorter. By providing this step, moisture can be appropriately removed.

Next, the negative electrode 14 is formed using the formed negative electrode material (Step S20). That is, the negative electrode material layer 22 containing a negative electrode material is formed on the surface of the current collecting layer 20 to form the negative electrode 14.

In addition, in the present manufacturing method, the positive electrode 16 is formed (Step S22). In Step S22, a positive electrode material may be formed by the same method as in Steps S10 to S20 except that a lithium compound raw material which is a lithium compound is used instead of the amorphous carbon raw material. Then, a positive electrode material layer containing a positive electrode material is formed on the surface of the current collecting layer for the positive electrode 16 to form the positive electrode 16.

After the negative electrode 14 and the positive electrode 16 are formed, the battery 1 is manufactured using the negative electrode 14 and the positive electrode 16 (Step S24). Specifically, the negative electrode 14, the separator 18, and the positive electrode 16 are stacked to form the electrode group 12, and the electrode group 12 and the electrolyte are housed in the casing 10 to manufacture the battery 1.

As described above, in the present embodiment, as shown in Steps S10 to S20, the third solution in which Na, O, and W are contained and amorphous carbon is dispersed is produced, and the liquid component is removed from the third solution to manufacture the negative electrode material. Hereinafter, such a method for manufacturing a negative electrode material is appropriately referred to as a solution method. However, the method for manufacturing a negative electrode material of the present embodiment is not limited to the solution method. For example, instead of the solution method, the negative electrode material may be manufactured by a method using a ball mill, a spray drying method, a CVD method, or the like. The method using a ball mill is a method for manufacturing a negative electrode material by adding amorphous carbon and NaₓWO_{y} to a ball mill and rotating the ball mill at a predetermined rotation speed for a predetermined time. The spray drying method is a method for manufacturing a negative electrode material by adding amorphous carbon to a tungsten solution containing Na, and spraying and drying the solution for dissolution. The CVD method is a method in which a tungsten solution containing Na is dried, placed in a CVD furnace together with amorphous carbon, and subjected to chemical vapor deposition at a predetermined temperature to manufacture a negative electrode material. In addition, similarly, a method for manufacturing a positive electrode material is not limited to the solution method, and any method such as a method using a ball mill, a spray drying method, or a CVD method may be used.

As described above, the negative electrode material of a battery according to the present embodiment includes amorphous carbon and sodium tungstate provided on a surface of the amorphous carbon. The negative electrode material according to the present embodiment can improve battery characteristics such as capacity by providing sodium tungstate on the surface of the carbon. In addition, in a negative electrode material in which sodium tungstate is provided on a surface of carbon, it is required that sodium tungstate is appropriately disposed on the surface of the carbon. In a case where sodium tungstate cannot be appropriately disposed on the surface of the carbon, that is, in a case where sodium tungstate is not provided on the surface of the carbon or sodium tungstate is separated from the surface of the carbon, the battery characteristics cannot be appropriately improved. On the other hand, in the negative electrode material according to the present embodiment, amorphous carbon is used as carbon, and sodium tungstate is provided on a surface of the amorphous carbon. The amorphous carbon can contain a functional group (for example, a hydroxy group and a carboxyl group) on the surface when sodium tungstate is disposed on the surface. Therefore, sodium tungstate can be appropriately trapped on the surface of the amorphous carbon by the functional group, and sodium tungstate can be appropriately disposed on the surface. In addition, adhesion of the sodium tungstate to the surface of the amorphous carbon can be increased by the functional group, and separation of the sodium tungstate from the surface of the carbon can be suppressed. Therefore, in the negative electrode material according to the present embodiment, sodium tungstate can be appropriately disposed on the surface of the carbon. Then, by using a negative electrode material in which sodium tungstate is provided on a surface of amorphous carbon as in the present embodiment, it is possible to improve the capacity particularly when a high current is charged and discharged, such that the characteristics of the battery can be improved. In particular, since an amorphous carbon raw material is manufactured at a temperature lower than that of, for example, graphite, it is easy to remain without removing the functional group, and sodium tungstate can be appropriately disposed on the surface.

In addition, the negative electrode material according to the present embodiment includes sodium tungstate having a crystal structure of at least one of a cubic crystal and a tetragonal crystal. In addition, sodium tungstate having a triclinic crystal structure may be included. Cubic or tetragonal sodium tungstate is attached on a surface of amorphous carbon, such that sodium tungstate can be appropriately sticked on the surface of the carbon.

In addition, in the negative electrode material according to the present embodiment, sodium tungstate is represented by a chemical formula of NaₓWO_{y}, x is preferably more than 0 and 1 or less, and y is preferably 2 or more and 4 or less. By including sodium tungstate of such a chemical formula, sodium tungstate can be appropriately disposed on the surface of the carbon.

In addition, the negative electrode material according to the present embodiment preferably has a content of sodium of 0.01% or more and 0.5% or less in terms of a mass ratio, a content of tungsten of 0.5% or more and 10% or less in terms of a mass ratio, and a content of oxygen of 0.1% or more and 5% or less in terms of a mass ratio when measured by fluorescent X-ray analysis. When Na, W, and O are in these ranges, sodium tungstate is appropriately included, and thus, sodium tungstate can be appropriately disposed on the surface of the carbon.

In addition, the negative electrode material according to the present embodiment preferably has Na/W, which is a content ratio of sodium to tungsten, of 0.001 or more and 0.15 or less when measured by fluorescent X-ray analysis. When Na/W is in this range, sodium tungstate is appropriately included, and thus, sodium tungstate can be appropriately disposed on the surface of the carbon.

In addition, the negative electrode material according to the present embodiment preferably does not include graphite. Sodium tungstate can be disposed on a surface of carbon using amorphous carbon without containing graphite.

In addition, a method for manufacturing a negative electrode material according to the present embodiment includes a step of adding amorphous carbon to a first solution containing sodium in which a surfactant is dissolved, to produce a second solution in which amorphous carbon is dispersed in the first solution; a step of mixing the second solution and a tungsten solution containing tungsten to produce a third solution; and a step of producing a negative electrode material by removing a liquid component of the third solution. As described above, in a method for manufacturing a negative electrode according to the present embodiment, a negative electrode material is manufactured using the third solution in which Na, W, and O are dissolved and amorphous carbon is dispersed, such that it is possible to appropriately stick sodium tungstate on a surface of carbon. In addition, amorphous carbon is added to the first solution in which a surfactant is dissolved before the tungsten solution is added, such that the amorphous carbon is appropriately dispersed, and sodium tungstate can be appropriately sticked on the surface of the carbon.

In addition, in the method for manufacturing a negative electrode material according to the present embodiment, a ratio of the amount of tungsten added to the amount of amorphous carbon added is preferably 0.5% or more and 10% or less in terms of a mass ratio. When the amount of W added is in this range, sodium tungstate can be appropriately formed on a surface of amorphous carbon, and the battery characteristics can be improved as a negative electrode.

In addition, the negative electrode material production step preferably includes a drying step of drying the third solution to produce a negative electrode intermediate and a heating step of heating the negative electrode intermediate. By heating the negative electrode intermediate formed by drying the third solution to produce a negative electrode material, sodium tungstate can be appropriately formed on the surface of the amorphous carbon, and the battery characteristics can be improved as a negative electrode.

In addition, the heating step preferably includes a step of heating the negative electrode intermediate to a first temperature of 150°C or higher and 625°C or lower at a first heating rate, a step of heating the negative electrode intermediate heated to the first temperature, to a second temperature of 680°C or higher and 750°C or lower at a second heating rate higher than the first heating rate, and a step of holding the negative electrode intermediate at the second temperature. By forming the negative electrode material through the first heating step and the second heating step, sodium tungstate can be appropriately formed by adhering to the surface of the carbon.

### Examples

Next, Examples will be described.

### Example 1

In Example 1, a negative electrode material was manufactured by the solution method described in the embodiment. Specifically, as a first solution, a solution in which SDS was dissolved using water as a solvent and a surfactant was prepared. A concentration of SDS in the first solution was set to 4.8%. Then, an amorphous carbon raw material was added to the first solution so that a mass ratio of SDS in the first solution to the amorphous carbon raw material to be added was 3%, and the mixture was stirred to obtain a second solution. Then, ammonium tungstate (tungsten solution) was added to the second solution so that the amount of W contained in the ammonium tungstate (tungsten solution) with respect to the amorphous carbon raw material in the first solution was 5% in terms of a mass ratio, thereby obtaining a third solution. Then, the third solution was stirred, and then moisture was evaporated by heating and dried to produce a negative electrode intermediate. Then, the negative electrode intermediate was introduced into a tubular furnace (firing furnace), heated to a first heating temperature of 550°C at a first heating rate of 60°C/hour under a nitrogen atmosphere, and after reaching the first heating temperature, the negative electrode intermediate was heated to a second heating temperature of 700°C at a second heating rate of 180°C/hour, and held for 2 hours. After holding for 2 hours, the heating was stopped and the temperature was naturally lowered to 50°C to produce a negative electrode material.

### Example 2

In Example 2, a negative electrode material was produced in the same manner as in Example 1, except that the amount of W contained in ammonium tungstate (tungsten solution) with respect to the amorphous carbon raw material in the first solution was 5.0% in terms of a mass ratio.

### Example 3

In Example 3, a negative electrode material was produced under the same conditions as those in Example 1, except that a surfactant C₁₂H₂₅O(C₂H₄)ₙH (poly (oxyethylene) dodecyl ether) was added so that the concentration of the surfactant in the first solution was 5%, and sodium stearate was added so that the amount of Na in the first solution with respect to the amorphous carbon raw material was 0.025 wt%.

### Comparative Example 1

In Comparative Example 1, only amorphous carbon was used as a negative electrode material.

### Identification of Negative Electrode Material

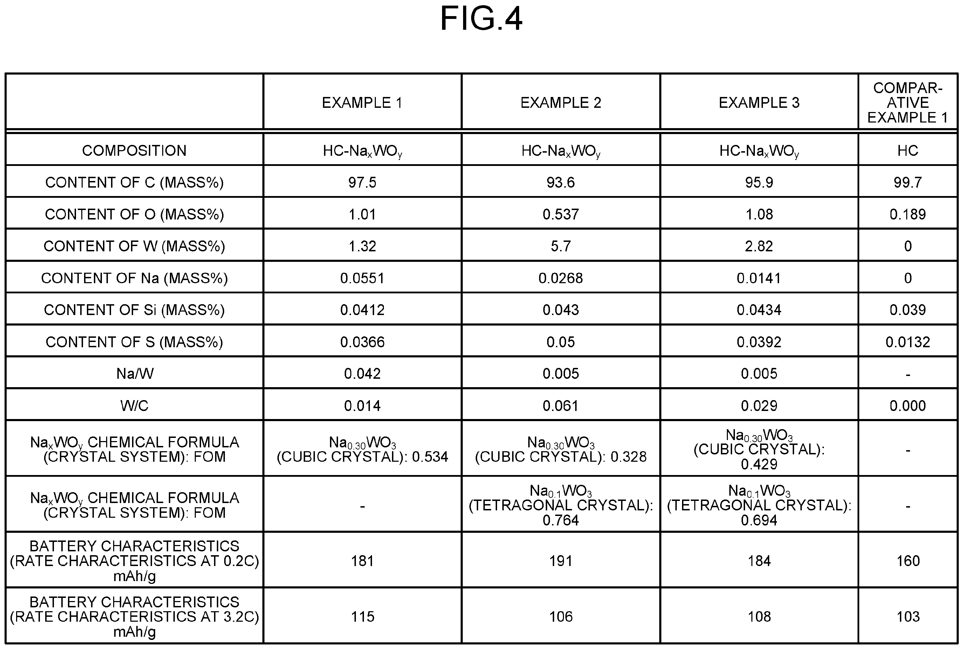

FIG. 4 is a table showing identification results of the negative electrode material in each example. The negative electrode material manufactured in each example was subjected to fluorescent X-ray analysis to measure the content of elements contained in the negative electrode material and Na/W and W/C. The measurement results of the contents of the elements are illustrated in FIG. 4. Note that as the measurement conditions of the fluorescent X-ray analysis, the conditions described in the above embodiment were used.

The negative electrode materials of Examples 1 to 3 also contain elements (here, Si and S) other than C derived from amorphous carbon, and Na, W, and C derived from sodium tungstate, but these elements are impurities. In addition, elements (here, O, Si, and S) other than C contained in Comparative Example 1 are also contained, but these elements are impurities. In addition, inevitable impurities may be included in addition to the elements listed in FIG. 4.

The negative electrode material manufactured in each example was subjected to XRD to identify the chemical formula and crystal structure of sodium tungstate included in the negative electrode material. The identification results are illustrated in FIG. 4. Note that as the measurement conditions of XRD, the conditions described in the above embodiment were used.

XRD measurement shows that the negative electrode material of Example 1 includes cubic Na_{0.3}WO₃, and the negative electrode material of Example 2 includes cubic Na_{0.3}WO₃ and tetragonal Na_{0.1}WO₃.

The negative electrode material manufactured in each example was observed by an SEM. As shown in the observation results of the SEM, it can be seen that sodium tungstate is provided on the surface of the amorphous carbon in Examples 1 and 2.

### Evaluation Results

As the evaluation of the negative electrode material of each example, the capacity of the negative electrode using the negative electrode material was measured. Specifically, a current value per 1 g (mAh/g) when the C-rate was 0.2 and a current value per 1 g (mAh/g) when the C-rate was 3.2 were measured. For example, the current value of the negative electrode per 1 g when the C-rate is 0.2 refers to a current value that consumes a rated capacity in 5 hours.

FIG. 4 illustrates evaluation results. As illustrated in FIG. 4, it is found that in Examples 1 to 3 in which sodium tungstate is provided on the surface of the amorphous carbon, the battery characteristics at 0.2 C are improved as compared with Comparative Example 1 in which sodium tungstate is not included. Further, the battery characteristics at 3.2 C of Examples 1 to 3 were 115, 106, and 108, indicating that sufficient values were maintained.

Although the embodiments of the present invention have been described above, the embodiments are not limited by the contents of the embodiments. In addition, the constituent elements described above include those that can be easily assumed by those skilled in the art or those that are substantially the same. Furthermore, the constituent elements described above can be appropriately combined. Furthermore, various omissions, substitutions, or changes in the constituent elements can be made without departing from the gist of the embodiments described above. Reference Signs List

- 1: Battery

- 14: Negative electrode
- 22: Negative electrode material layer
- 30: Amorphous carbon particle
- 32: NaₓWO_{y} particle

## Claims

1. A negative electrode material for a battery, comprising:
amorphous carbon; and
sodium tungstate provided on a surface of the amorphous carbon.

2. The negative electrode material according to claim 1, wherein the sodium tungstate has at least one of a cubic crystal structure and a tetragonal crystal structure.

3. The negative electrode material according to claim 1 or 2, wherein the sodium tungstate is represented by a chemical formula of NaₓWO_{y}, where x is more than 0 and 1 or less, and y is 2 or more and 4 or less.

4. The negative electrode material according to any one of claims 1 to 3, wherein a content of sodium is 0.01% or more and 0.5% or less in terms of a mass ratio, a content of tungsten is 0.5% or more and 10% or less in terms of a mass ratio, and a content of oxygen is 0.1% or more and 5% or less in terms of a mass ratio, as measured by fluorescent X-ray analysis.

5. The negative electrode material according to any one of claims 1 to 4, wherein Na/W that is a content ratio of sodium to tungsten is 0.001 or more and 0.15 or less, as measured by fluorescent X-ray analysis.

6. The negative electrode material according to any one of claims 1 to 5, comprising, as the sodium tungstate, at least one of Na_{0.3}WO₃, Na_{0.1}WO₃, Na₂WO₄, and Na₅W₁₄O₄₄.

7. A battery comprising:
the negative electrode material according to any one of claims 1 to 6; and
a positive electrode material.

8. A method for manufacturing a negative electrode material for a battery, the method comprising the steps of:
adding amorphous carbon to a first solution containing sodium in which a surfactant is dissolved, to produce a second solution in which amorphous carbon is dispersed in the first solution;
mixing the second solution and a tungsten solution containing tungsten to produce a third solution; and
producing a negative electrode material by removing a liquid component of the third solution.

9. The method for manufacturing a negative electrode material according to claim 8, wherein a ratio of an amount of the tungsten added to an amount of the amorphous carbon added is 0.1% or more and 10% or less in terms of a mass ratio.

10. The method for manufacturing a negative electrode material according to claim 8 or 9, wherein the step of producing the negative electrode material includes:
a drying step of drying the third solution to produce a negative electrode intermediate; and
a heating step of heating the negative electrode intermediate.

11. The method for manufacturing a negative electrode material according to claim 10, wherein the heating step includes the steps of:
heating the negative electrode intermediate to a first temperature of 150°C or higher and 625°C or lower at a first heating rate;
heating the negative electrode intermediate heated to the first temperature, to a second temperature of 680°C or higher and 750°C or lower at a second heating rate higher than the first heating rate; and
holding the negative electrode intermediate at the second temperature.

12. A method for manufacturing a battery, the method comprising:
the method for manufacturing a negative electrode material according to any one of claims 8 to 11; and
a step of manufacturing a positive electrode material.
